(19) Europäisches Patentamt
European Patent Office
Office européen des brevets

(11) Publication number: **0 191 983**
**B1**

(12) **EUROPEAN PATENT SPECIFICATION**

(45) Date of publication of patent specification: **11.01.89**

(51) Int. Cl.$^4$: **C 07 C 149/12,** C 08 K 5/37, C 09 K 15/14

(21) Application number: **85308713.8**

(22) Date of filing: **29.11.85**

# (54) Dithiodialkanoamidophenol compounds and organic material stabilized therewith.

(30) Priority: **17.01.85 US 692077**

(43) Date of publication of application:
**27.08.86 Bulletin 86/35**

(45) Publication of the grant of the patent:
**11.01.89 Bulletin 89/02**

(84) Designated Contracting States:
**AT BE CH DE FR GB IT LI LU NL SE**

(56) References cited:
**GB-A-1 241 617**
**US-A-3 679 744**
**US-A-3 769 315**
**US-A-4 055 599**

(73) Proprietor: **Mallinckrodt, Inc. (a Delaware corporation)**
**675 McDonnell Boulevard P.O. Box 5840**
**St. Louis Missouri 63134 (US)**

(72) Inventor: **Dunski, Neil**
**12507 Sunview**
**Creve Coeur, MO 63141 (US)**
Inventor: **Bazzi, Ali A.**
**13064 Fernstrails Lane**
**Creve Coeur, MO 63141 (US)**
Inventor: **Buehler, Henry J.**
**6040 Oleatha Avenue**
**St. Louis, MO 63139 (US)**

(74) Representative: **BATCHELLOR, KIRK & EYLES et al**
**2 Pear Tree Court Farringdon Road**
**London EC1R 0DS (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 191 983 B1

## Description

This invention relates to multifunctional dithiodialkanoamidophenol compounds useful in the stabilization of organic materials normally susceptible to oxidative degradation, a process for preparing the compounds and organic material stabilized with the compounds.

Numerous compounds, including various sterically hindered phenol derivatives, have been proposed for stabilizing organic materials, such as organic polymers, against oxidative and thermal degradation.

Knell et al, U.S. Patent 3,679,744, discloses thiodialkanoamidophenol compounds (more specifically designated as N,N'-bis(alkylhydroxyphenyl)thiaalkanedicarboxamides) obtained by a procedure involving the reaction of a selected alkylaminophenol with a thiodialkanoyl chloride. According to the patent, these monosulfur compounds are useful as stabilizers of organic materials which are subject to oxidative deterioration. Poly-alpha-olefins such as polyethylene, polypropylene, polybutylene, polyisoprene and copolymers thereof are included among the organic materials set forth in the patent. One such monosulfur compound, disclosed in Example I thereof is N,N'-bis(3',5'-di-*t*-butyl-4'-hydroxy-phenyl)-2-thiapropane-1,3-dicarboxamide.

However, heretofore known compounds, such as the monosulfide compounds set forth above, have not been entirely satisfactory for stabilizing organic materials, such as polyolefins (e.g., polyethylene and polypropylene), against oxidative and thermal degradation. Accordingly, there is a substantial need in the art for new compounds having the capability of stabilizing organic materials, such as polyethylene and polypropylene, against such degradation.

It has now been found that the hereinafter described disulfides, which are hindered phenylhydroxyalkyl esters of dithiodialkanoic acids, have such stabilizing capabilities. Such compounds are hereinafter sometimes referred to as DTDA amidophenols or terms of similar import.

### Description of the Invention

Generally stated, the present invention provides disulfide compounds which may be represented by Formula I below:

(I) 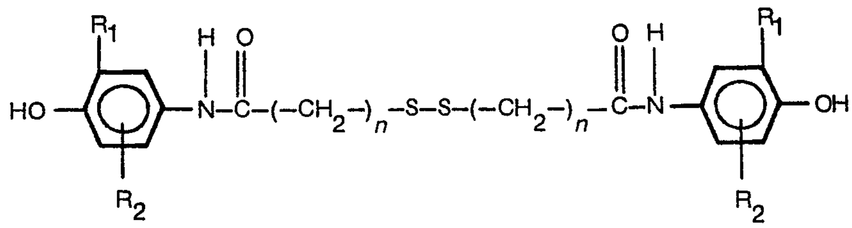

wherein *n* is an integer from 1 to 10; $R_1$ is an alkyl group containing from one to eight carbon atoms or a cycloalkyl group containing from five to 12 carbons atoms. $R_2$ is hydrogen, an alkyl group containing from one to 8 carbon atoms or a cycloalkyl group containing from 5 to 12 carbon atoms.

In another aspect, generally stated, the present invention provides a method for making the compounds of Formula I above, which comprises contacting a selected *m,m'*-di-thiodialkanoic acid chloride, where *m* is a number equal to the number of carbon atoms in each alkanoyl moiety of the acid chloride, with a selected alkylaminophenol under amide-forming reaction conditions.

In still another aspect of this invention, there are provided organic compositions of matter stabilized against thermal-oxidative degradation, which comprise an organic material and a stabilizing amount of the compound of Formula I.

### Detailed Description of the Invention and of the Manner and Process of Making and Using It

In the compounds of Formula I above where $R_2$ is other than hydrogen, in general each $R_2$ substituent is preferably located ortho to the hydroxyl group on its respective benzene ring, but may be in the meta position.

Suitable alkyl groups from which $R_1$ and $R_2$ may be selected include methyl, ethyl, propyl, isopropyl, butyl, amyl, hexyl, octyl, and the like. Included also are tertiary alkyl groups, such as t-butyl, t-amyl, t-octyl, and the like. Suitable cycloalkyl groups from which $R_1$ and $R_2$ may be selected include cyclopentyl, cyclohexyl, cyclooctyl, cyclododecyl, and the like. Preferably, $R_1$ and $R_2$ are t-butyl groups, with both $R_2$ groups located in their ortho positions. The number of $CH_2$ groups in the compounds is preferably such that, in Formula I above, *n* is from 2 to about 4 and most preferably is 2.

The DTDA amidophenol compounds of this invention include, for example:

(a) N,N'-bis(3',5'-di-t-butyl-4'-hydroxyphenyl)-2,3-dithiabutane-1,4-dicarboxamide;
(b) N,N'-bis(3',5'-di-t-butyl-4'-hydroxyphenyl)-3,4-dithiahexane-1,6-dicarboxamide;
(c) N,N'-bis(3',5'-di-t-butyl-4'-hydroxyphenyl)-5,6-dithiahexane-1,8-dicarboxamide;
(d) N,N'-bis(3',5'-di-t-butyl-4'-hydroxyphenyl)-6,7-dithiahexane-1,10-dicarboxamide;
(e) N,N'-bis(3',5'-dimethyl-4'-hydroxyphenyl)-3,4-dithiahexane-1,6-dicarboxamide;
(f) N,N'-bis(3',5'-dicyclohexyl-4'-hydroxyphenyl)-3,4-dithiahexane-1,6-dicarboxamide;

(g) N,N'-bis(3',5'-di-t-amyl-4'-hydroxyphenyl)-3,4-dithiahexane-1,6-dicarboxamide; and

(h) N(3'-t-butyl-6'-methyl-4'-hydroxyphenyl)-N'-(3'',5''-di-t-butyl-4''-hydroxyphenyl)-3,4-dithiahexane-1,6-dicarboxamide.

Preferred compounds of this invention are compounds (a), (b), (c) and (d) above. Compound (b) above is most preferred and may be represented by Formula II below:

(II) 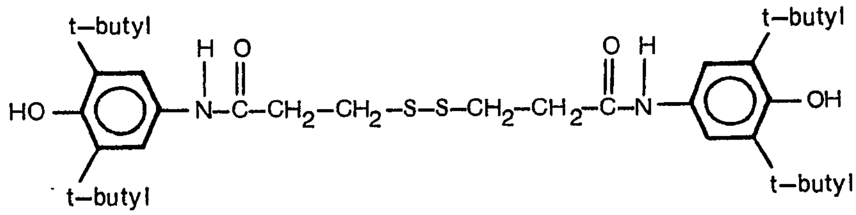

The reaction is carried out in a solution containing the reactants and at least a solubilizing amount of a solvent for at least one, and preferably both, of the reactants. Suitable solvents include, for example, toluene, triethylamine, acetone, pyridine, dimethylformamide, water, methylethylketone, methylisobutylketone, dioxane, and the like.

Approximately stoichiometric amounts of the reactants, that is a molar ratio of about 2 moles of alkylaminophenol per one mole of the dithioacid chloride, may be employed. The molar ratio is preferably at least 2:1 and, more preferably, is more than 2:1, e.g., up to about 2.4:1.

The reaction may be carried out at any suitable temperature, e.g., about 20—25°C, and any suitable pressure, e.g., 760 mm Hg, for any suitable period, e.g., from about 0.5 to about 5 hours or more. Although the time required for completion of the reaction is dependent upon the particular reactants, solvent, temperature, and pressure employed, the reaction will, in general, be substantially complete within about 1 to about 3 hours.

Advantageously, the reaction is carried out with stirring and under an inert gaseous blanket, i.e., at least substantially inert to the reactants, solvent and products employed. Nitrogen is the preferred inert gaseous blanket.

Hydrogen chloride is liberated in the course of the reaction, and therefore an alkaline material is used to neutralize the hydrogen chloride. Suitable alkaline materials which may be used to neutralize the hydrogen chloride include, for example, sodium or potassium hydroxide, sodium or potassium acetate, sodium or potassium carbonate, sodium or potassium bicarbonate, tertiary amines such as pyridine and triethylamine, and the like. Preferably the alkaline material is triethylamine.

The order of addition of the reactants is not critical.

Dithiodialkanoic acid chlorides which can be used include, for example, acid chlorides of dithiodiacetic acid, dithiodipropionic acid, dithiodibutyric acid and the like. The dithio acid chlorides may be derived from their corresponding dithio acid (which are commercially available), by reaction thereof with a chlorinating agent, e.g. thionyl chloride.

The aforesaid acids may be prepared by well known procedures, for example, substantially in accordance with the procedures disclosed in Murphy et al, U.S. Patent 2,623,066.

The starting aminophenols used in the present invention can be prepared by general procedures described in U.S. Pat. No. 3,156,690. Advantageously, the aminophenols are prepared by hydrogenating the corresponding nitrosophenols and promptly thereafter reacted with dithiodialkanoyl chloride.

The compounds of the present invention are useful as stabilizers of organic materials normally subject to oxidative deterioration. Such organic materials include, for example: synthetic organic polymeric substances such as vinyl resins formed from the polymerization of vinyl halides or from the copolymerization of vinyl halides with unsaturated polymerizable compounds, e.g., vinyl esters, alpha, beta-unsaturated aldehydes and unsaturated hydrocarbons such as butadienes and styrene; poly-alpha-olefins such as polyethylene (e.g., linear low density polyethylene), polypropylene, polybutylene (e.g., polybutene-1), polyisoprene, and the like, including copolymers of polyalpha-olefines, polyurethanes, polyamides such as polyhexamethylene adipamide and polycaprolactam; polyesters such as polymethylene terephthalates; polycarbonates, polyacetals; polystyrene; polyethyleneoxide; and copolymers such as those of high impact polystyrene containing copolymers of butadiene and styrene and those formed by the copolymerization of acrylonitrile, butadiene and/or styrene. Other materials which can be stabilized by the active compounds of the present invention include lubrication oil of the aliphatic ester type, i.e., di(2-ethylhexyl)-azelate, pentaerythritol tetracaproate, and the like; animal and vegetable derived oils, e.g., linseed oil, fat, tallow, lard, peanut oil, cod liver oil, castor oil, palm oil, corn oil, cotton-seed oil, and the like; hydrocarbon materials such as gasoline, mineral oil, fuel oil, drying oil, cutting fluids, waxes, resins and the like, fatty acids, soaps and the like.

The compounds of this invention (represented by Formula I above) may be employed in any stabilizing amount as stabilizers for organic materials normally susceptible to oxidative degradation. Such amount may be for example, from about 0.005% to about 10% by weight of the stabilized composition. For polyolefins, e.g. linear low density polyethylene, polypropylene and poly(butene-1), such amount is preferably from about 0.05% to about 5% and more preferably from about 0.1% to about 1%.

The compounds of this invention may be used alone or in combination with other stabilizers or additive materials, such as dilauryl-beta-thiodipropionate and distearyl-beta-thiodipropionate.

Other antioxidants, antiozonants, thermal stabilizers, ultraviolet light absorbers, coloring materials, dyes, pigments, metal chelating agents, etc. may also be used in the compositions of the invention.

Phosphite esters may also be used in stabilized compositions containing the novel antioxidant compounds of the present invention. Such phosphite esters include dialkyl phosphites (for example, distearyl phosphite, dilauryl phosphite, and the like e.g., trialkyl phosphites for example, trilauryl phosphite, tris(ethylhexyl) phosphite, and the like); and tris(alkaryl) phosphites (for example tris(nonylphenyl)phosphites, and the like).

The compounds of this invention are especially useful for stabilizing polymeric materials such as polyolefins and the like, e.g., polyethylene (especially linear low density polyethylene, i.e., LLDPE), polypropylene, poly(butene-1), and the like.

Stabilized compositions of matter of this invention may be prepared by incorporating the compounds into the organic material to be stabilized using well known methods for incorporating stabilizers into such material. For example, in general, the stabilizer may simply be physically admixed with the organic material.

It is well known that upon processing polyethylenes at elevated temperature, cross-linking takes place. This results in an apparent increase in molecular weight and hence lower melt index values. More importantly, it also results in a change in molecular weight distribution by increasing, due to cross-linking, the high molecular weight tail. In many applications, it is desired that polyethylene not cross-link while being processed. Accordingly, a feature of a good stabilizer is that the melt index does not appreciably decrease when working a polyethylene as in extrusion operations.

Practice of the present invention is illustrated by the following non-limiting examples. All parts, percents and other amounts given throughout this disclosure, including the examples which follow, are by weight unless otherwise indicated.

## Example 1

N,N′-bis(3′,5′-di-*t*-butyl-4′-hydroxyphenyl)-2,3-dithiahexane-1,4-dicarboxamide (desired compound)

A 2 liter parr bomb was charged with 23.5 g (0.1 mole) 2,6-di-tert-butyl-4-nitrosophenol, 0.5 g of 5% Pd/C catalyst and 500 ml toluene. After purging the system with nitrogen, it was pressurized with hydrogen supplied at 50 psig (4.4 bar). After the hydrogen uptake ceased, the system was purged with nitrogen and the resulting nitrogen atmosphere was maintained throughout the ensuing reaction procedure. Based on method of preparation, the reaction mixture now contained 2,6-di-tert-butyl-4-aminophenol. Next, to this mixture was added triethylamine, 10.1 g (0.1 mole). Thereafter, with stirring, dithiodiacetyl chloride, 11 g (0.05 mole) was added thereto portionwise over a brief period and the resulting mixture was stirred for one hour.

The resulting solid material was removed by filtration and thereafter the toluene was stripped off under reduced pressure. The residue was crystallized from toluene, yielding 23.5 g (80% yield) of the desired compound (which melted at 127°C), the structure of which was confirmed by IR, $^1H$ and $^{13}C$ NMR analyses.

## Example 2

N,N′-bis(3′,5′-di-tert-butyl-4-hydroxyphenyl)-3,4-dithiahexane-1,6-dicarboxamide

Following the applicable portion of the procedure described in Example 1 above, except for the use of 2,6-di-tert-butyl-4-aminophenol and dithiodipropionyl chloride, there was obtained N,N′-bis(3′,5′-di-tert-butyl-4′-hydroxyphenyl)-3,4-dithiahexane-1,6-dicarboxamide in 82% yield; mp 211°C. NMR spectrum confirmed the structure of the product.

## Example 3

Linear Low Density Polyethylene

In this Example, the composition of Example 1 (hereinafter Compound I) was tested for capability of stabilizing linear low density polyethylene (LLDPE, Union Carbide Corporation) against oxidative and thermal degradation. For comparative purposes, a test sample of the LLDPE to which no compound was added was also tested. 0.7 g of compound I was blended with a separate sample (700 g) of linear low density polyethylene, LLDPE, (melt index 1.0) devoid of any added antioxidant. The resulting blend as well as the LLDPE without any antioxidant added was extruded twice at 160°C in a 3/4″ (19 mm) Brabender extruder. The extruder speed was set at 50 rpm. Each extruded rod was pelletized prior to reextrusion. Following the two compounding passes at 160°C each sample was extruded 5 times at 260°C and 50 rpm, with each extruded rod being water quenched and pelletized prior to reextrusion. The melt index was then determined according to ASTM D1238 condition E (190°C, 2160 g) on each of the pelletized samples following the first, third and fifth extrusion at 260°C. Samples from the second extrusion at 160°C were compression molded at 170°C and 10 tons pressure into plaques of 25 mils (0.64 mm) thickness.

Twelve chips, each about 1 inch (25.4 mm) in diameter, were cut from each plaque and placed in a 150°C air circulating oven. Time to degradation was determined for these chips. As is well known to those skilled in the art, the "time to degradation" in such oven aging test is the time at which substantially the entire sample becomes discolored and brittle.

The following results were obtained:

Melt Index, g/10 min.
ASTM D1238 Condition E

| Anti-oxidant | 1st Extrusion at 260°C | 3rd Extrusion at 260°C | 5th Extrusion at 260°C | Hours To Degradation at 150°C |
|---|---|---|---|---|
| None | 0.61 | 0.38 | 0.29 | 24 |
| Compound I | 1.03 | 1.09 | 1.14 | 192 |

The results show very good retention of melt index during processing as well as very good long term oven stability for Compound I.

Example 4

Poly(butene-1)

In this Example, the procedure and certain of the test set forth in Example 3 were repeated except that poly(butene-1) was substituted for the polyethylene; compounding was effected by using one extrusion pass instead of two; after compounding, each sample was extruded four times at 200°C; and melt flow rate was determined for each sample following the first, third and fourth extrusion at 200°C. The amount of Compound I employed was 0.25 parts per 100 parts of the polymer.

The following results were obtained:

Melt Flow Rate, g/10 min.
ASTM D1238 Condition E

| Anti-oxidant | 1st Extrusion at 260°C | 3rd Extrusion at 260°C | 5th Extrusion at 260°C | Hours To Degradation at 150°C |
|---|---|---|---|---|
| None | 0.94 | 1.50 | 1.96 | 24 |
| Compound I | 0.50 | 0.53 | 0.59 | 696 |

The results show very good retention of melt index during processing as well as very good long term oven stability for Compound I.

Example 5

Polypropylene

In this Example, the procedure and certain of the test set forth in Example 3 were repeated except that polypropylene(Profax 6501) was substituted for the polyethylene and melt flow rate was determined for each sample following the first, third and fourth extrusion at 260°C. The amount of Compound I employed was 0.10 part per 100 parts of the polymer. Calcium stearate (0.10 parts on the same basis) was also blended with the other ingredients to form each blend.

The following results were obtained:

Melt Flow Rate, g/10 min.
ASTM D1238 Condition E

| Anti-oxidant | 1st Extrusion at 260°C | 3rd Extrusion at 260°C | 5th Extrusion at 260°C | Hours To Degradation at 150°C |
|---|---|---|---|---|
| None | 10.2 | 23.7 | — | 48 |
| Compound I | 3.8 | 8.0 | 11.2 | 200 |

The results show very good retention of melt index during processing as well as very good long term oven stability for Compound I.

Best Mode Contemplated

The best mode contemplated for carrying out this invention has been set forth in the above description, for example, by way of setting forth preferred materials and operating conditions, including but not limited to preferred ranges and values of amounts and other non-obvious variables material to successfully practicing the invention in the best way contemplated at the time of executing this patent application.

**Claims**

1. A dithioalkanoamidophenol compound having the following formula:

( I ) 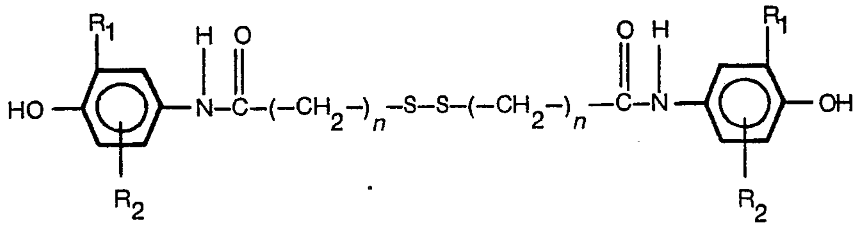

wherein $n$ is an integer from 1 to 10; $R_1$ is an alkyl group containing from one to eight carbon atoms or a cycloalkyl group containing from five to 12 carbon atoms, and $R_2$ is hydrogen, an alkyl group containing from one to eight carbon atoms or a cycloalkyl group containing from 5 to 12 carbon atoms.

2. A compound according to claim 1, wherein $R_1$ and $R_2$ are tertiary alkyl groups.

3. A compound according to claim 1, wherein $R_1$ and $R_2$ are tertiary butyl groups.

4. N,N'-bis(3',5'-di-tert-butyl-4'-hydroxyphenyl)-3,4-dithiahexane-1,6-dicarboxamide.

5. A composition of matter comprising an organic material normally subject to oxidative deterioration and a stabilizing amount of a compound according to any one of claims 1 to 4.

6. A composition according to claim 5, wherein the organic material is a polymeric material.

7. A composition according to claim 6, wherein the polymeric material is a polyolefin.

8. A composition according to claim 7, wherein the polyolefin is polyethylene.

9. A composition according to claim 8, wherein the polyethylene is linear low density polyethylene.

10. A composition according to claim 7, wherein the polyolefin is polypropylene.

11. A composition according to claim 7, wherein the polyolefin is poly(butene-1).

**Patentansprüche**

1. Dithioalkanoamidophenol-Verbindung der folgenden Formel

( I ) 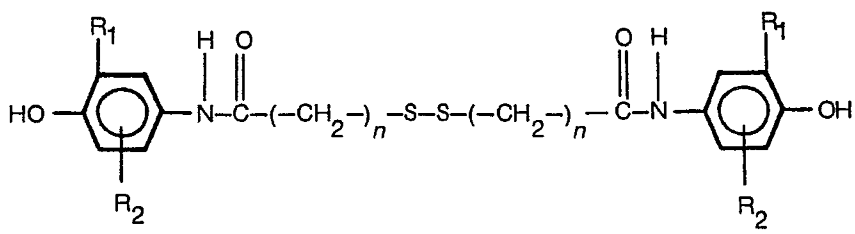

worin $n$ eine ganze Zahl von 1 bis 10, $R_1$ eine Alkylgruppe mit 1 bis 8 Kohlenstoffatomen oder eine Cycloalkylgruppe mit 5 bis 12 Kohlenstoffatomen und $R_2$ Wasserstoff, eine Alkylgruppe mit 1 bis 8 Kohlenstoffatomen oder eine Cycloalkylgruppe mit 5 bis 12 Kohlenstoffatomen ist.

2. Verbindung nach Anspruch 1, bei der $R_1$ und $R_2$ tertiäre Alkylgruppen sind.

3. Verbindung nach Anspruch 1, in der $R_1$ und $R_2$ tertiäre Butylgruppen sind.

3. N,N'-Bis(3',5'-di-tert-butyl-4'-hydroxyphenyl)-3,4-dithiahexan-1,6-dicarboxamid.

5. Stoffzusammensetzung mit einem organischen Material, das normalerweise oxidativer Zerstörung unterliegt, und einer stabilisierenden Menge einer Verbindung nach einem der Ansprüche 1 bis 4.

6. Zusammensetzung nach Anspruch 5, in der das organische Material ein polymeres Material ist.

7. Zusammensetzung nach Anspruch 6, in der das polymere Material ein Polyolefin ist.

8. Zusammensetzung nach Anspruch 7, in der das Polyolefin Polyäthylen ist.

9. Zusammensetzung nach Anspruch 8, in der das Polyäthylen lineares Polyäthylen niedriger Dichte ist.

10. Zusammensetzung nach Anspruch 7, in der das Polyolefin Polypropylen ist.

11. Zusammensetzung nach Anspruch 7, in der das Polyolefin Poly(buten-1)ist.

**Revendications**

1. Un dithioalcanoamidophénol répondant à la formule suivante:

(I) 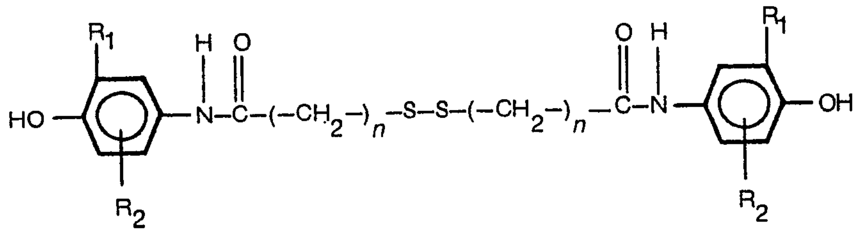

dans laquelle n est un entier de 1 à 10; $R_1$ est un groupe alkyle contenant de 1 à 8 atomes de carbone ou un groupe cycloalkyle contenant de 5 à 12 atomes de carbone et $R_2$ est un hydrogène, un groupe alkyle contenant de 1 à 8 atomes de carbone ou un groupe cycloalkyle contenant de 5 à 12 atomes de carbone.

2. Un composé selon la revendication 1, dans lequel $R_1$ et $R_2$ sont des groupes alkyles tertiaires.

3. Un composé selon la revendication 1, dans lequel $R_1$ et $R_2$ sont des groupes butyles tertiaires.

4. N,N'-bis(3',5'-di-tert-butyl-4'hydroxyphényl)-3,4-dithiahexane-1,6-dicarboxamide.

5. Une composition comprenant une matière organique normalement sujette à la détérioration par oxydation et une quantité stabilisante d'un composé selon l'une quelconque des revendications 1 à 4.

6. Une composition selon la revendication 5, dans laquelle la matière organique est une matière polymère.

7. Une composition selon la revendication 6, dans laquelle la matière polymère est une polyoléfine.

8. Une composition selon la revendication 7, dans laquelle la polyoléfine est un polyéthylène.

9. Une composition selon la revendication 8, dans laquelle le polyéthylène est un polyéthylène linéaire basse densité.

10. Une composition selon la revendication 7, dans laquelle la polyoléfine est un polypropylène.

11. Une composition selon la revendication 7, dans laquelle la polyoléfine est un poly(butène-1).